# EUROPÄISCHE PATENTSCHRIFT

(11) **EP 1 427 038 B1**
(45) Veröffentlichungstag und Bekanntmachung des Hinweises auf die Patenterteilung: **08.07.2009**
(21) Anmeldenummer: 03023487.6
(22) Anmeldetag: 18.10.2003
(51) Int. Cl.: H01M 2/12, H01M 2/36, H01M 10/48

(54) **Akkumulator und Verschlussstopfen für einen Akkumulator**
Accumulator and plug for an accumulator
Accumulateur et bouchon pour un accumulateur

(30) Priorität: 26.11.2002 DE 10255290
(43) Veröffentlichungstag der Anmeldung: 09.06.2004
(73) Patentinhaber: VB Autobatterie GmbH & Co. KGaA, 30419 Hannover (DE)
(72) Erfinder: Streuer, Peter, 30559 Hannover (DE)
(74) Vertreter: Gerstein, Hans Joachim

(56) Entgegenhaltungen:
- EP-A- 0 996 986
- DE-A1- 3 330 823
- DE-A1- 10 023 747
- DE-A1- 10 117 576
- DE-A1- 19 856 691
- GB-A- 1 401 947
- US-A- 3 083 256

## Beschreibung

Die Erfindung betrifft einen Akkumulator mit einem, mehrere mit einem Elektrolyten befüllbare Zellen aufweisenden, mit einem Deckel und mit einem Entgasungssystem versehenen Gehäuse, wobei das Entgasungssystem und der Deckel so angeordnet sind, dass sich jeweils daran angebrachte Öffnungen über den Zellen befinden, und wobei jeweils ein Verschlussstopfen in die Öffnungen so einbringbar ist, dass der Verschlussstopfen mit einem Oberteil die Öffnungen nach außen abdeckt und sich in Richtung der Zellen mit einem Unterteil erstreckt, das einen einen Hohlraum umgebenden Schwappkorb aufweist, der über seinen Umfang verteilte Längsschlitze aufweist. Die Erfindung betrifft auch einen Verschlussstopfen zum Abschließen von in einem Akkumulator oberhalb von Zellen angebrachten Öffnungen, mit einem Oberteil und einem in einen Schwappkorb auslaufenden Unterteil, wobei der Schwappkorb entlang seines Umfangs Schlitze aufweist.

Aus DE 100 23 747 A1 ist eine Stopfenanordnung zum gasdichten Verschließen einer Zellenöffnung eines Akkumulators bekannt, die ein Auslaufen von Säure weitestgehend verhindert und eine ausreichende Entgasung ermöglicht. Dabei ist das Zelleninnere über eine Öffnung in der Mantelfläche des Verschlussstopfens mit einem zwischen einem Ober- und Unterdeckel des Gehäusedeckels gebildeten Hohlraum verbunden. Die Öffnung ist dabei mit einer Zweiwegedichtmembran versehen. Hierbei muss der Verschlussstopfen vorsichtig eingesetzt werden, um eine Beschädigung der Dichtmembran zu vermeiden.

Die EP 0 996 986 B1 beschreibt einen Stopfen zum Verschließen von Batteriezellen, der ein im Wesentlichen zylindrisches, aus Kunststoff gebildetes und unten offenes Gehäuse aufweist, dessen obere Öffnung durch einen Deckel verschließbar ist. Ist der Stopfen in einem Akkumulator eingebaut, so werden aus den Zellen aufsteigende Gase und verdunstende Flüssigkeit von einem im Bereich der oberen Öffnung des Stopfengehäuses vorgesehenen Labyrintheinsatz aufgenommen. Zu den Zellen hin gerichtet weist der Labyrintheinsatz Stifte auf, an denen kondensierende Flüssigkeit nach unten in die Zelle abtropfen kann. In einer unteren Öffnung des Stopfens ist ein konisch zur Zelle hin auslaufender Korb längsverstellbar vorgesehen, welcher einer Kontrolle der und dem Nachfüllen von Flüssigkeit dient. Hierbei gestaltet sich das Einsetzen des Stopfens in den Akkumulator dadurch schwierig, dass zunächst der Korb in eine Öffnung oberhalb der Zellen eingeführt und dann der obere Teil des Stopfens senkrecht zum Deckel des Akkumulators genau eingeführt werden muss.

Weiter ist ein Verschlussstopfen für einen Akkumulator aus der DE 33 30 823 A1 bekannt, der mit einem Einsetzteil in eine Öffnung des Akkumulatordeckels einsetzbar ist. Das mit einem Deckel verschließbare Einsetzteil ist mit einem Einfüllstutzen verbunden, der einstückig in einen Säurekäfig ausläuft. Der Säurekäfig dient der Überprüfung des Säurestandes in dem Akkumulator und weist Umfangsschlitze auf, die von einer Unterkante begrenzt werden. Auch hier gestaltet sich das Einsetzen des Stopfens insbesondere bei fertigungsbedingten Abweichungen der Öffnungsmaße von den Normmaßen schwierig.

Ein durch die Offenlegungsschrift DE 198 56 691 A1 beschriebener elektrischer Akkumulator weist in einem Zellendeckel angeordnete Entgasungsstopfen auf, an deren Unterteil ein Schwappkorb vorhanden ist. Der Schwappkorb weist an seinem Umfang sich nach unten erweiternde Schlitze auf. Der Schwappkorb weist ebenso einen nach innen umgelegten Boden auf, der sich zur Mitte des Stopfens hin kegelförmig nach oben erstreckt. Die Schlitze werden unten von dem Boden begrenzt. Dadurch erhält der Entgasungsstopfen eine Steifigkeit, die ein genaues Einführen des Entgasungsstopfens in einem rechten Winkel zum Zellendeckel erfordert.

DE 101 17 576 A1 offenbart einen elektrischen Akkumulator mit einem ein Entgasungssystem aufweisenden Deckel und einem Verschlussstopfen in dem Deckel. Der Verschlussstopfen hat einen relativ starren Schwappkorb, der das Eintreten von Säurespritzern in das Stopfeninnere behindert. Zwischen Unterdeckel und Schwappkorb ist ein kapillarer aktiver Spalt vorgesehen.

US 3,083,256 offenbart einen Verschlussstopfen für einen Akkumulator mit einem durch Stege aufgeteilten Hohlraum zur Gasableitung und Aufnahme von in den Hohlraum einschwappender Säure. Der Verschlussstopfen hat einen nach unten weisenden rohrförmigen Anschlussflansch, um den Verschlussstopfen in eine Öffnung eines Batteriedeckels einzuklemmen. Der rohrförmige Anschlussflansch hat Einkerbungen, durch die der Einflussflansch flexibel an unterschiedliche Durchmesser von Einfüllstopfen angepasst werden kann.

GB 1 401 947 A offenbart einen Stopfen zum Verschließen von Batteriezellen mit einem sich in Richtung Zelle erstreckenden Rohrstutzenteil und einem unterhalb des Abschlussdeckels des Stopfens im Oberteil und Innenraum des Verschlussstopfens angeordneten Schwappkorb. Sowohl im Rohrstutzen, als auch in dem Schwappkorb sind Schlitze vorgesehen. Die durch die Schlitze aufgeteilten Wandabschnitte des Schwappkorbes sind aus einer Innen- und Außenwand gebildet, die am freien Ende der Wandabschnitte zusammengefügt sind und zu einer starren Ausprägung der Wandabschnitte führen.

Der Erfindung liegt die Aufgabe zugrunde, die Einfüllöffnungen eines Akkumulators selbst bei einem, etwa herstellungsbedingten Versatz der Öffnungen des Deckels und der Öffnungen des darunterliegenden Entgasungssystems zueinander mit Verschlussstopfen abschließen zu können.

Die Aufgabe wird bei dem Akkumulator der eingangs genannten Gattung beziehungsweise durch den Verschlussstopfen der eingangs genannten Gattung dadurch gelöst, dass die Schlitze bis zu einem freien Ende des Schwappkorbes durchgehen und nicht an der Unterkante des Schwappkorbes fixierte Lamellen bilden.

Die Erfindung bringt den Vorteil mit sich, das der Deckel eines Akkumulators leichtgängig mit den Verschlussstopfen verschlossen werden kann, wobei die Verschlussstopfen nicht unbedingt senkrecht zur Deckelfläche eingeführt werden müssen. Wird der Verschlussstopfen schräg in den Deckel eines Akkumulators eingeführt und stößt der Schwappkorb dabei an Innenwänden des Akkumulators an, so kann der Einführvorgang aufgrund der Biegsamkeit des Schwappkorbes durch die durchgehenden Schlitze weiter bis zu seiner Endposition eingeführt werden.

Bevorzugt ist der erfindungsgemäße Verschlussstopfen einstückig ausgebildet. Mit Vorteil wird hier die durch die Schlitze erreichte Elastizität des Schwappkorbes auf den gesamten Verschlussstopfen übertragen. Besonders bevorzugt ist der Verschlussstopfen durch ein Kunststoff-Spritzgussverfahren hergestellt. Dadurch ergibt sich der Vorteil einer auch in Längsrichtung vorhandenen leichten Elastizität. Durch die Beweglichkeit von durch die Schlitze gebildeten Lamellen des Schwappkorbes kann der Verschlussstopfen auch ohne eine exakte Zentrierung über den Öffnungen in den Deckel eingesetzt werden.

Das Entgasungssystem zur Aufnahme von Elektrolytgasen kann bei eingesetztem Verschlussstopfen auch über eine im Verschlussstopfen vorgesehene Öffnung mit den Schlitzen derart verbunden sein, dass die Schlitze Rückläufe für in das Entgasungssystem gelangten Elektrolyten bilden. Mit Vorteil können hier Flüssigkeitstropfen, die in das Entgasungssystem gelangt sind, wieder in die Zelle zurückgeführt werden.

In einer anderen Ausführung der Erfindung enthält der Verschlussstopfen einen an seinem Oberteil befestigten Ladezustands- und/oder Elektrolytstandsanzeiger, der das Unterteil und den von dem Schwappkorb umgebenen Hohlraum in Längsrichtung durchsetzt. Der Ladezustands- und/oder Elektrolytstandsanzeiger ragt dabei vorzugsweise so weit aus dem freien Ende heraus, dass er in den Elektrolyten bei dessen Normalpegel eintaucht.

Auch kann der Ladezustands- und/oder Elektrolytstandsanzeiger zumindest an einem daran angebrachten Sichtstab eine aufgeraute Oberfläche haben. Bevorzugt weist der Schwappkorb ebenfalls eine aufgeraute Oberfläche auf. Dadurch wird ein Aufsteigen von Elektrolyt-Flüssigkeit aus den Zellen etwa durch Kapillarkräfte weitestgehend vermieden.

Auch kann der Verschlussstopfen aus einem elektrisch leitenden Kunststoff gebildet sein, um elektrostatische Aufladungen zu vermeiden. Dabei kann vorteilhaft eine Potentialdifferenz durch eine Berührung des Elektrolyten von wenigstens einer der Lamellen des Schwappkorbes vermieden werden.

Erfindungsgemäß kann der Verschlussstopfen eine an dem Oberteil angebrachte vorzugsweise angespritzte Dichtung aufweisen, die den Deckel des Akkumulators bei eingesetztem Verschlussstopfen nach außen abdichtet. Auch ist am Deckel des Akkumulators ein Gewinde zur Aufnahme eines an dem Oberteil des Verschlussstopfens vorgesehenen Gegengewindes möglich.

Die Erfindung wird nachfolgend an mehreren Ausführungsbeispielen im Zusammenhang mit den begleitenden Figuren näher erläutert, wobei gleiche Teile mit gleichen Bezugszeichen versehen sind. Dabei zeigen:
- Figur 1a: einen Teilschnitt durch einen erfindungsgemäßen Akkumulator,
- Figur 1b: eine Unteransicht auf einen erfindungsgemäßen Verschlussstopfen und
- Figur 2: eine weitere Ausführungsform des erfindungsgemäßen Verschlussstopfens in einem, in einen Akkumulator eingesetzten Zustand.

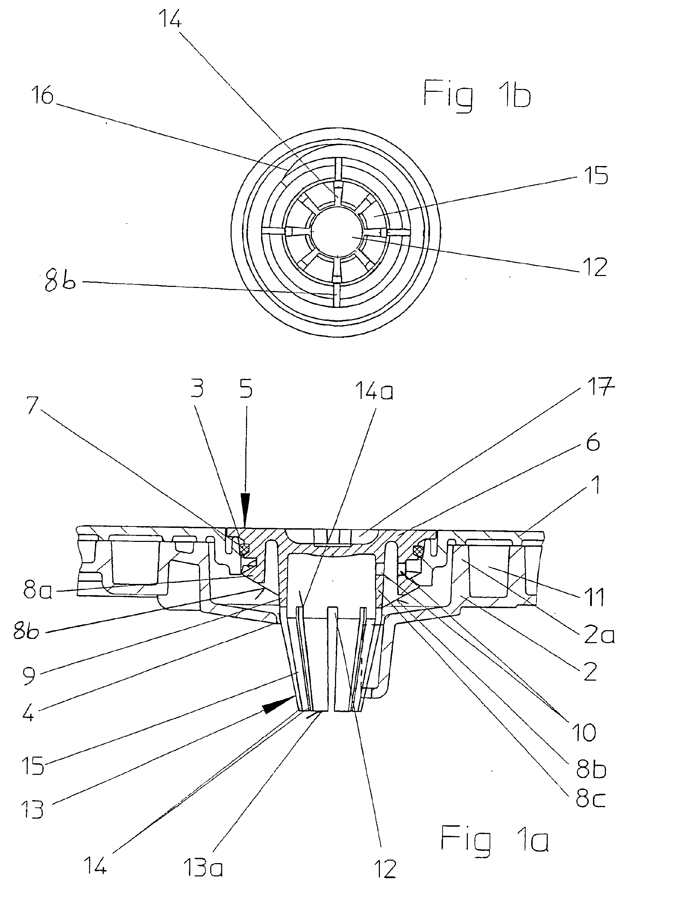

Nach Figur 1a ist ein Deckel 1 des erfindungsgemäßen Akkumulators oberhalb eines hohlkörperartigen Entgasungssystems 2 vorgesehen. Der Deckel 1 liegt dabei auf Stützstegen 2a des Entgasungssystems 2. In übereinander angeordnete Öffnungen 3, 4 des Deckels 1 und des Entgasungssystems 2 ist ein Verschlussstopfen 5 eingesetzt. Über einen entlang des Umfangs eines Oberteils 6 des Verschlussstopfens 5 angespritzten Dichtring 7 wird die Öffnung 3 bei eingesetztem Verschlussstopfen 5 luft- und flüssigkeitsdicht nach außen abgeschlossen. Nach Figur 1a ist der Verschlussstopfen 5 mit einem Gewinde 16 mit dem Deckel 1 befestigt. Dabei greift ein Gewindegang 8a in ein am Deckel 1 angebrachtes Gegengewinde.

An einer Seitenwand 8c eines Unterteils 9 des Verschlussstopfens 5 ist eine Öffnung 10 vorgesehen, die einen Entgasungskanal 11 des Entgasungssystems 2 über einen vom Verschlussstopfen 5 umgebenen nach unten offenen Hohlraum 12 mit dem Zelleninneren (nicht gezeigt) verbindet.

An das Unterteil 9 des Verschlussstopfens 5 schließt sich in Richtung der Zelle ein an seiner Unterseite 13a offener Schwappkorb 13 an. Der Schwappkorb 13 weist die Form eines Kegelstumpfes auf. Ausgehend von der Unterseite 13a verlaufen entlang der Mantelfläche des kegelstumpfartigen Schwappkorbes 13 zum Unterteil 9 hin Schlitze 14. Die Schlitze 14 werden von der Unterseite 13a des Schwappkorbes 13 bis zu ihrem Ende 14a im Unterteil 9 breiter. Die Mantelfläche des kegelstumpfartigen Schwappkorbes 13 ist durch die Schlitze in Lamellen 15 unterteilt. Durch die Schlitze 14 bzw. die Lamellen 15 des als Kunststoff-Spritzgussteil gefertigten Verschlussstopfens 5 ist der Schwappkorb 13 elastisch verformbar, insbesondere durch seitlich ansetzende Kräfte.

Die Schlitze 14 dienen als Rückläufe für Elektrolytflüssigkeit, die bei einem Entgasungsvorgang des Akkumulators aus den Zellen in Richtung des Deckels 1 aufgestiegen ist und von diesem aus dem Entgasungssystem 2 in die Zellen zurücklaufen. Die Unterseite 13a des Schwappkorbes 13 berührt in der Regel den normalen Elektrolytspiegel in den Zellen oder taucht in den Elektrolyten ein. Durch Bewegungen insbesondere Schrägstellungen des Akkumulators kann der Elektrolytspiegel an einigen der Lamellen 15 ansteigen. Um zu verhindern, dass dabei der Elektrolyt in den Schlitzen 14 des Schwappkorbes 13 zum Deckel 1 hin nach einem Abfallen des Elektrolytspiegels etwa durch Kapillarkräfte ansteigen kann, weisen die Lamellen 15 eine raue Oberfläche auf.

Nach Figur 1b stützt sich das Gewinde 16 radial mit Stützrippen 8b zur Mitte des Verschlussstopfens 5 hin ab. Über eine als Einschraubhilfe dienende Ausnehmung 17 (Figur 1a) am Oberteil 6 des Verschlussstopfens 5 kann das Einschrauben erleichtert werden.

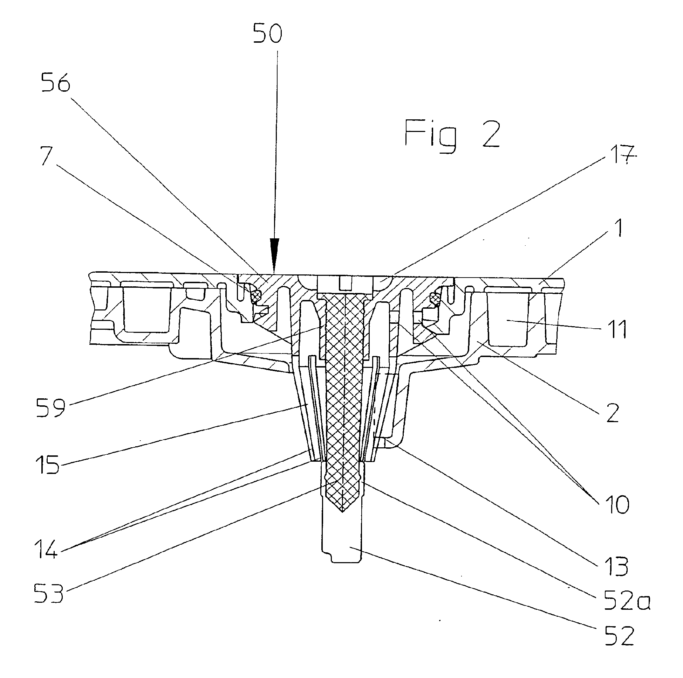

Die in Figur 2 gezeigte Ausführungsform eines erfindungsgemäßen Verschlussstopfens 50 bzw. eines erfindungsgemäßen Akkumulators weist einen an einem Oberteil 56 angesetzten und den Schwappkorb 13 in Richtung der Zellen durchsetzenden Ladezustands- und Elektrolytstandsanzeiger 52 auf. Der Ladezustands- und Elektrolytstandsanzeiger 52 weist einen Sichtstab 53 auf, der vom Oberteil 56 aus, ein Unterteil 59 und den Schwappkorb 13 durchsetzend, bis zu einem, verbreiterten unteren Abschnitt 52a des Ladezustands- und Elektrolytstandsanzeigers 52 geführt ist. Der Ladezustands- und Elektrolytstandsanzeiger 52 taucht mit seinem Sichtstab 53 bei einem Normalpegel in den Elektrolyten ein. Nach einer Entnahme des Verschlussstopfens 50 kann dann am Sichtstab 53 der Füllstand des Akkumulators mit dem Elektrolyten überprüft und/oder gemessen werden. Der Sichtstab 53 weist eine raue Oberfläche auf, die einem Ablaufen von zeitweise in Richtung des Deckels 1 über einen Normalpegel des Elektrolyten aufgestiegenem Elektrolyten dient.

## Patentansprüche

1. Akkumulator mit einem, mehrere mit einem Elektrolyten befüllbare Zellen aufweisenden, mit einem Deckel und mit einem Entgasungssystem versehenen Gehäuse, wobei das Entgasungssystem und der Deckel so angeordnet sind, dass sich jeweils daran angebrachte Öffnungen über den Zellen befinden, und wobei jeweils ein Verschlussstopfen in die Öffnungen so einbringbar ist, dass der Verschlussstopfen mit einem Oberteil die Öffnungen nach außen abdeckt und sich in Richtung der Zellen mit einem Unterteil erstreckt, das einen einen Hohlraum umgebenden Schwappkorb aufweist, der über seinen Umfang verteilte Schlitze aufweist, **dadurch gekennzeichnet, dass** die Schlitze (14) bis zu einem freien Ende (13a) des Schwappkorbes (13) durchgehen und nicht an der Unterkante des Schwappkorbes 13) fixierte Lamellen (15) bilden.

2. Akkumulator nach Anspruch 1, **dadurch gekennzeichnet, dass** der Verschlussstopfen (5, 50) einstückig ausgebildet ist.

3. Akkumulator nach Anspruch 1 oder 2, **dadurch gekennzeichnet, dass** das Entgasungssystem (2) bei eingebrachtem Verschlussstopfen (5, 50) über eine im Verschlussstopfen (5, 50) vorgesehene Öffnung (10) mit dem Schwappkorb (13) derart verbunden ist, dass die Schlitze (14) Rückläufe für Elektrolyten aus dem Entgasungssystem (2) bilden.

4. Akkumulator nach einem der Ansprüche 1 bis 3, **dadurch gekennzeichnet, dass** der Verschlussstopfen (50) einen an seinem Oberteil (56) befestigten Ladezustands- und/oder Säurestandsanzeiger (52, 53) aufweist, der das Unterteil (59) und den von dem Schwappkorb (13) umgebenen Hohlraum (12) in Längsrichtung durchsetzt.

5. Akkumulator nach Anspruch 4, **dadurch gekennzeichnet, dass** der Ladezustands- und/oder Säurestandsanzeiger (52, 53) und/oder der Schwappkorb (13) eine aufgeraute Oberfläche aufweisen.

6. Akkumulator nach einem der Ansprüche 1 bis 5, **dadurch gekennzeichnet, dass** der Verschlussstopfen (5, 50) aus einem elektrisch leitenden Kunststoff gebildet ist.

7. Akkumulator nach Anspruch 6, **dadurch gekennzeichnet, dass** der Schwappkorb (13) bei eingebrachtem Verschlussstopfen (5, 50) mit dem freien Ende (13a) den in den Zellen befindlichen Elektrolyten berührt.

8. Akkumulator nach einem der Ansprüche 1 bis 7, **dadurch gekennzeichnet, dass** der Verschlussstopfen (5, 50) eine an dem Oberteil (6, 56) angebrachte Dichtung (7) aufweist, die den Deckel (1) bei eingebrachtem Verschlussstopfen (5, 50) nach außen abdichtet.

9. Verschlussstopfen zum Abschließen von in einem Akkumulator oberhalb von Zellen angebrachten Öffnungen, mit einem Oberteil und einem in einen Schwappkorb auslaufenden Unterteil, wobei der Schwappkorb entlang seines Umfangs Schlitze aufweist, **dadurch gekennzeichnet, dass** die Schlitze (14) bis zu einem freien Ende (13a) des Schwappkorbes (13) durchgehen und nicht an der Unterkante des Schwappkorbes (13) fixierte Lamellen (15) haben.

10. Verschlussstopfen nach Anspruch 9, **dadurch gekennzeichnet, dass** an dem Oberteil (56) ein Ladezustands- und Elektrolytstandsanzeiger (52, 53) vorgesehen ist, der den Schwappkorb (13) durchsetzt und an dem freien Ende (13a) herausragt.

## Claims

1. Rechargeable battery having a housing which has two or more cells that can be filled with an electrolyte and is provided with a cover and a degassing system, in which the degassing system and the cover are arranged such that openings which are incorporated in each of them are located above the cells, and which a sealing plug can be introduced into each of the openings such that an upper part of the sealing plug covers the openings on the outside, and a lower part of the sealing plug extends in the direction of the cells and has a splash basket which surrounds a cavity and has slots distributed over its circumference, **characterized in that** the slots (14) continue as far as a free end (13a) of the splash basket (13) and form plates (15) which are not fixed to the lower edge of the splash basket (13).

2. Rechargeable battery according to Claim 1, **characterized in that** the sealing plug (5, 50) is integral.

3. Rechargeable battery according to Claim 1 or 2, **characterized in that,** when the sealing plug (5, 50) is fitted, the degassing system (2) is connected to the splash basket (13) via an opening (10) which is provided in the sealing plug (5, 50), such that the slots (14) from return paths for electrolyte from the degassing system (2).

4. Rechargeable battery according to one of Claims 1 to 3, **characterized in that** the sealing plug (50) has a state of charge indicator and/or acid level indicator (52, 53) which is attached to its upper part (56) and passes through the lower part (59) and the cavity (12), which is surrounded by the splash basket (13), in the longitudinal direction.

5. Rechargeable battery according to Claim 4, **characterized in that** the state of charge indicator and/or acid level indicator (52, 539 and/or the splash basket (13) have/has a roughened surface.

6. Rechargeable battery according to one of Claims 1 to 5, **characterized in that** the sealing plug (5, 50) is formed from an electrically conductive plastic.

7. Rechargeable battery according to Claim 6, **characterized in that,** when the sealing plug (5, 50) is fitted, the free end (13a) of the splash basket (13) touches the electrolyte located in the cells.

8. Rechargeable battery according to one of Claims 1 to 7, **characterized in that** the sealing plug (5, 50) has a seal (7) which is fitted to the upper part (6, 56) and seals the cover (1) on the outside when the sealing plug (5, 50) is fitted.

9. Sealing plug for sealing openings which are incorporated above cells in a rechargeable battery, having an upper part having a lower part which ends in a splash basket, with the splash basket having slots along its circumference, **characterized in that** the slots (14) continue as far as a free end (13a) of the splash basket (13) and form plates (15) which are not fixed to the lower edge of the splash basket (13).

10. Sealing plug according to Claim 9, **characterized in that** a state of charge indicator and electrolyte level indicator (52, 53) is provided in the upper part (56), passes through the splash basket (13) and projects at the free end (13a).

## Revendications

1. Accumulateur comportant un boîtier muni de plusieurs cellules remplies d'un électrolyte, d'un couvercle et d'un système de dégazage, le système de dégazage et le couvercle sont disposés pour que leurs ouvertures se trouvent au-dessus des cellules et
un bouchon respectif peut être placé dans les ouvertures,
le bouchon, par sa partie supérieure, couvre l'ouverture vers l'extérieur et s'étend en direction des cellules par sa partie inférieure, ce bouchon a un panier anti-éclaboussures entourant une cavité, et des fentes réparties en périphérie,
**caractérisé en ce que**
les fentes (14) sont continues jusqu'à l'extrémité libre (13a) du panier anti-éclaboussures (13) et elles forment des lamelles (15) qui ne sont pas fixées au niveau de l'arête inférieure du panier anti-éclaboussures.

2. Accumulateur selon la revendication 1,
**caractérisé en ce que**
le bouchon (5, 50) est en une seule pièce.

3. Accumulateur selon les revendications 1 ou 2,
**caractérisé en ce que**
lorsque le bouchon (5, 50) est placé dans le système de dégazage (2), une ouverture (10) du bouchon (5, 50) est reliée au panier anti-éclaboussures (13) pour que les fentes (14) forment des retours pour l'électrolyte provenant du système de dégazage (2).

4. Accumulateur selon l'une des revendications 1 à 3,
**caractérisé en ce que**
le bouchon (50) comporte un indicateur d'état de charge et/ou de niveau d'acidité (52, 53) fixé à sa partie supérieure (56), cet indicateur traversant la partie inférieure (59) et la cavité (12) entourant le panier anti-éclaboussures (13) dans la direction longitudinale.

5. Accumulateur selon la revendication 4,
**caractérisé en ce que**
l'indicateur d'état de charge et/ou de niveau d'acidité (52, 53) et/ou le panier anti éclaboussures (13) ont une surface rendue rugueuse.

6. Accumulateur selon l'une des revendications 1 à 5,
**caractérisé en ce que**
le bouchon (5, 50) est en une matière plastique électroconductrice.

7. Accumulateur selon la revendication 6,
**caractérisé en ce que**
lorsque le bouchon (5, 50) est mis en place, le panier anti-éclaboussures (13) vient en contact par son extrémité libre (13a) avec l'électrolyte qui se trouve dans les cellules.

8. Accumulateur selon l'une des revendications 1 à 7,
**caractérisé en ce que**
le bouchon de fermeture (5, 50) comporte un joint (7) au niveau de la partie supérieure (6, 56), ce joint assurant l'étanchéité du couvercle (1) vis-à-vis de l'extérieur lorsque le bouchon (5, 50) est mis en place.

9. Bouchon pour fermer des ouvertures prévues dans un accumulateur au-dessus des cellules, ayant une partie supérieure et une partie inférieure se terminant par un panier anti-éclaboussures, le panier ayant des fentes réparties suivant sa périphérie,
**caractérisé en ce que**
les fentes (14) arrivent jusqu'à l'extrémité inférieure (13a) du panier anti-éclaboussures (13) et elles ont des lamelles (15) qui ne sont pas fixées au niveau de l'arête inférieure du panier anti-éclaboussures (13).

10. Bouchon selon la revendication 9,
**caractérisé par**
un indicateur d'état de charge et de niveau d'électrolyte (52, 53) prévu sur la partie supérieure (56), et qui traverse le panier anti-éclaboussures (13) et dépasse de l'extrémité libre (13a).
